(19) **Europäisches Patentamt / European Patent Office / Office européen des brevets**

(11) **EP 1 962 449 B1**

(12) **EUROPEAN PATENT SPECIFICATION**

(45) Date of publication and mention
of the grant of the patent:
**20.09.2017 Bulletin 2017/38**

(21) Application number: **05818679.2**

(22) Date of filing: **12.12.2005**

(51) Int Cl.:
*H04J 13/00* (2011.01)     *H04B 1/707* (2011.01)

(86) International application number:
**PCT/CN2005/002151**

(87) International publication number:
**WO 2007/068138 (21.06.2007 Gazette 2007/25)**

(54) **A SYSTEM AND METHOD FOR ADJUSTING AMPLITUDE OF THE CHANNEL DECODED DATA IN CDMA SYSTEM**

SYSTEM UND VERFAHREN ZUR JUSTIERUNG DER AMPLITUDE DER KANALDECODIERTEN DATEN IN EINEM CDMA-SYSTEM

SYSTÈME ET PROCÉDÉ POUR L'AJUSTEMENT D'AMPLITUDE DE DONNÉES DÉCODÉES DE CANAL DANS UN SYSTÈME D'ACCÈS MULTIPLE PAR RÉPARTITION DE CODE (CDMA)

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**27.08.2008 Bulletin 2008/35**

(73) Proprietor: **ZTE Corporation**
**Shenzhen, Guangdong 518057 (CN)**

(72) Inventors:
• **DING, Jiewei**
**Guangdong 518057 (CN)**
• **TANG, Changchun**
**Guangdong 518057 (CN)**

• **YANG, Xi**
**Guangdong 518057 (CN)**
• **YUAN, Weitao**
**Guangdong 518057 (CN)**

(74) Representative: **Awapatent AB**
**Junkersgatan 1**
**582 35 Linköping (SE)**

(56) References cited:
**EP-A1- 1 263 179       EP-A1- 1 596 516**
**WO-A1-99/63723        WO-A1-03/019832**
**CN-A- 1 464 660        CN-A- 1 474 529**
**US-A1- 2004 101 071**

**Description**

**Technical Field**

The present invention relates to CDMA wireless communication system, especially to data amplitude adjustment before the channel decoding.

**Technical Background**

In the wireless communication system, the channel coding and decoding technology is used a lot to guarantee the stability of communications. The data input into the decoder is a fixed integer data and the bit width for each data is limited, such as the input of 8 bits. However, during the demodulation process before decoding, the generated data bit width often does not match the bit width required by the decoder, such as the 32 bits wide. Therefore, an amplitude adjustment process is needed to adjust the bit width of the demodulated data result to the one that is needed by the decoder. During the demodulation, the quantization noise and the saturation distortion shall be minimized at most and the performance of the decoder shall be exerted at best. In general, the decoder needs to ensure that the amplitude adjustment values in one decoding block are the same. One decoding block is usually defined as all the data transmitted in one TTI (Transmission Time Interval).

In WCDMA (Wideband CDMA) system, the duration of one TTI can be 10-80 ms. Supposing each data is of 32 bits (4 bytes) before amplitude adjustment, then the data volume during this period can reach 600-307200 bytes. Generally, in voice communication, the TTI is 20ms and the data volume can reach 4800 bytes in total. It is unrealistic to perform amplitude estimation and adjustment after storing all these data until the data during one TTI have been received. In the current adjustment technology, the most commonly employed method is: storing part of the data that need to be adjusted (it is usually the data of the first 10ms in the TTI, and it needs to store 2400 bytes in the voice communication), using these data for amplitude estimation (calculating amplitude average value for all the data) and adjustment value computation, then performing amplitude adjustment for the stored data and the sequent data of this TTI based on the calculated adjusted value; repeating the cyclic data storage and adjustment value computation during the next TTI.

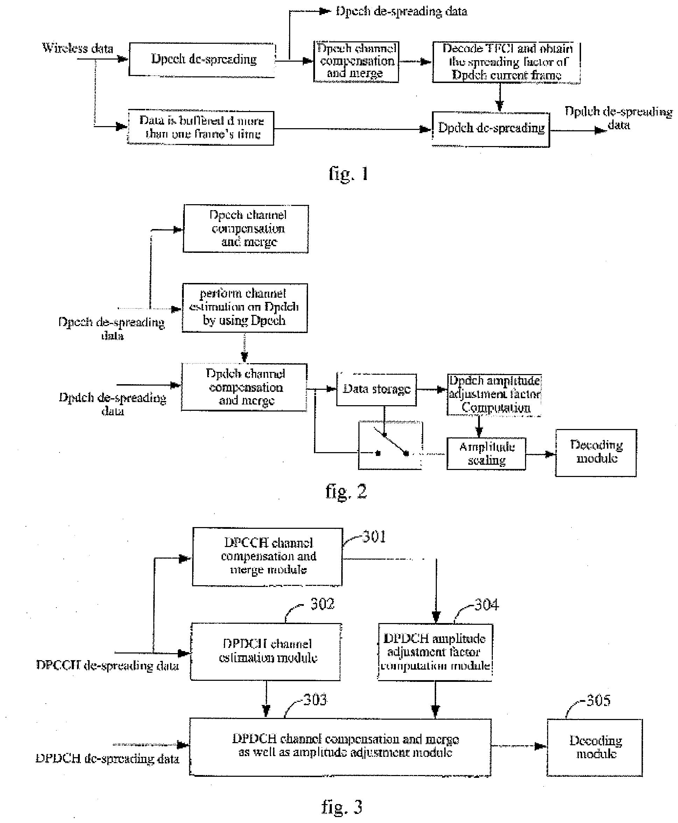

Fig 2 shows a traditional amplitude adjustment method, wherein, storing the data after the first frame DPDCH channel in each TTI is compensated and merged; after the data of the first frame are stored, using these data for DPDCH amplitude adjustment factor computation; and performing amplitude adjustment for the data of the current frame according to the calculated amplitude adjustment factor; the demodulated data of the sequent frames in this TTI do not need to be stored but are adjusted directly.

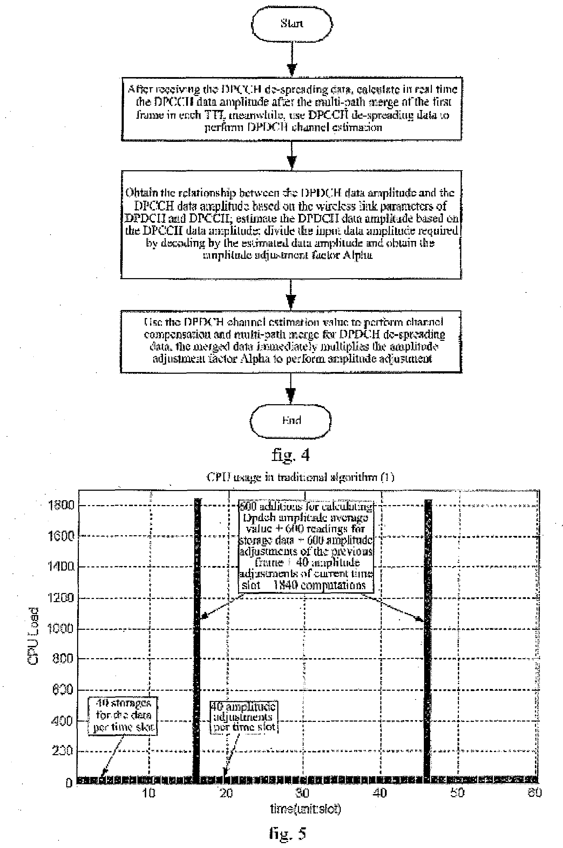

Fig 5 shows the CPU utilization condition in the above traditional amplitude adjustment method. Fig. 5 shows the CPU utilization condition during two TTI periods by taking the example wherein each TTI has the data of two frames and the DPDCH spreading factor is 64. In fig 5, the abscissa represents time with its unit being time slot, the ordinate represents the number of additions or multiplications or the data-readings and writings. For the sake of simplicity, the computation load of addition for one time is equal to the computation load of multiplication for one time and also equal to the computation load of data reading or writing for one time. This kind of approximation is feasible in the current ASIC processing or CPU processing such as DSP chip. During the 15 time slots in the first frame of TTI, it needs to store DPDCH and in each time slot, there are 40 DPDCH data; when it reaches the first time slot of the second frame, it needs to read 600 data of the previous frame and perform addition and averaging for the 600 data, furthermore, it also needs to adjust the amplitude for the 600 data of the previous frame as well as the 40 DPDCH data in the current time slot, so there are 1840 computations in total. The sequent time slots of TTI need to perform 40 amplitude adjustment computations.

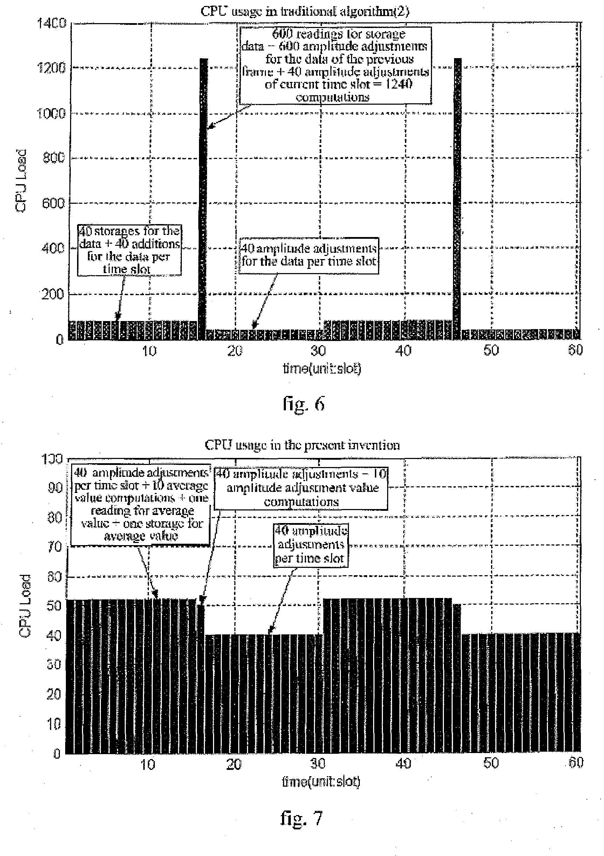

Fig 6 shows the CPU utilization condition in another traditional amplitude adjustment method. Fig 6 shows the CPU utilization condition during two TTI periods by taking the same example where each TTI has the data of two frames and the DPDCH spreading factor is 64. In fig 6, the abscissa represents time with its unit being time slot, the ordinate represents the number of additions or multiplications or the data-readings and writings. During 15 time slots in the first frame of TTI, this traditional method needs to store DPDCH and perform addition for the data amplitude; in each time slot there are 40 DPDCH data; when it reaches the first time slot of the second frame, it needs to read 600 data of the previous frame, furthermore, it also needs to adjust the amplitude for the 600 data of the previous frame as well as the 40 DPDCH data in the current time slot, so there are 1240 computations in total. The sequent time slots of TTI need to perform 40 amplitude adjustment computations. From fig 6, it can be seen that there is a burst computation in each TTI, which will bring severe adverse result to the system when it exceeds the peak processing capability of CPU.

In summary, the shortcomings of the traditional amplitude adjustment methods are:

　　1. it need to store part of the data to perform adjustment value computation which will consume some memory space, for example, each user needs to take up 2400 bytes of the memory in voice communication.

2. As shown in fig 5 and fig 6, when performing amplitude adjustment for the stored data, the burst computation amount is huge which will easily cause system congestion; when storing and reading data, there is no computation in theory, but it spends more time and consumes more computation resource for moving the data to the storage space or reading the data from the storage space than addition.

3. During the amplitude adjustment, the processing flows for the stored data and un-stored data are different, so the realization of the flow is complicated and is unfavorable for optimizing the execution efficiency.

In regard to the above shortcomings, the present invention proposes a new system and method for amplitude adjustment, which is suitable for WCDMA system and other CDMA systems.

The document EP 1263179 A1 discloses a method for the reception of signals according to the 3GPP CDMA standard and a receiver for the reception of signals according to the 3GPP CDMA standard.

## Summary of the Invention

The technical problem to be solved in the present invention is to provide a system and method for adjusting the amplitude of the data for channel decoding in CDMA system, which can reduce the memory consumption for amplitude adjustment computation and can distribute the computation load evenly so as to contribute to the stability of the system.

The present invention provides a method for adjusting the amplitude of the data for channel decoding in CDMA system, comprising the following steps:

(a) after receiving the de-spreading data of the physical control channel, computing in real time the data amplitude of the physical control channel after the multi-path merge of the first frame in each transmission time interval, meanwhile, performing channel estimation for the physical data channel by using the de-spreading data of the physical control channel;

(b) obtaining the relationship between the data amplitude of the physical data channel and the data amplitude of the physical control channel according to the radio link parameters of the physical control channel and the physical data channel; estimating the data amplitude of the physical data channel based on the data amplitude of the physical control channel, and dividing the input data amplitude required by channel decoding by the estimated data amplitude, then acquiring the adjustment factor;

(c) performing channel compensation and multi-path merge for the de-spreading data of the physical data channel by using the channel estimation value of the physical data channel, then the merged data immediately multiplying the adjustment factor to perform amplitude adjustment.

Furthermore, the above method also has the following characteristic: in said step (a), it realizes the real time computation for the data amplitude of the control channel through performing cumulative addition for the data amplitude of the physical control channel in each time interval or each symbol until the first frame ends, then dividing it by the number of the cumulative data.

Furthermore, the above method also has the following characteristic: in said step (b), it uses the following formula to compute the data amplitude of the physical data channel:

$$AmpPDCH = AmpPCCH*(Gd*Bd*CEd*SFd)/(Gc*Bc*CEc*SFc)$$

In which, AmpPDCH represents the data amplitude of the physical data channel; AmpPCCH represents the data amplitude of the physical control channel; CEd represents the compensation factor modulus of the physical data channel; SFd represents the spreading factor of the physical data channel; CEc represents the compensation factor modulus of the physical control channel; Bc represents the data amplitude factor of the physical control channel in the transmitted signals; Bd represents the data amplitude factor of the physical data channel in the transmitted signals; Gc represents the amplificatory multiple of the physical control channel amplitude due to the truncation processing; Gd represents the amplificatory multiple of the physical data channel amplitude due to the truncation processing; when there is no truncation processing, Gc=Gd=1.

Furthermore, the above method also has the following characteristic: said physical control channel and said physical data channel are dedicated physical control channel and dedicated physical data channel; or they are enhanced dedicated physical control channel and enhanced dedicated physical data channel; or they are high-speed dedicated physical control channel and high-speed dedicated physical data channel.

The present invention also provides a system for adjusting the amplitude of the data for channel decoding in CDMA system, which comprises a physical control channel compensation and merge module, and a physical data channel estimation module; the system is characterized in further comprising a amplitude adjustment factor computation module of physical data channel, a compensation and merge as well as amplitude adjustment module of physical data channel, wherein:

after said amplitude adjustment factor computation module of physical data channel receives the compensated and merged physical control channel data output from the physical control channel compensation and merge module, it obtains the relationship between the data amplitude of the physical data channel and the data amplitude of the physical control channel according to the radio link parameters of the physical control channel and physical data channel; estimates the data amplitude of the physical data channel according to the data amplitude of the physical control channel; divides the input data amplitude required by channel decoding by the estimated data amplitude, and obtains the adjustment factor, which is sent to the compensation and merge as well as amplitude adjustment module of physical data channel.

Said compensation and merge as well as amplitude adjustment module of physical data channel is for performing channel compensation and multi-path merge for de-spreading data of physical data channel by using the channel estimation value output from the physical data channel estimation module; the merged data immediately multiplies the above amplitude adjustment factor to perform amplitude adjustment.

Furthermore, the above method also has the following characteristics: said amplitude adjustment factor computation module of physical data channel uses the following formula to compute the data amplitude of said physical data channel:

$$AmpPDCH = AmpPCCH*(Gd*Bd*CEd*SFd)/(Gc*Bc*CEc*SFc)$$

In which, AmpPDCH represents the data amplitude of the physical data channel; AmpPCCH represents the data amplitude of the physical control channel; CEd represents the compensation factor modulus of the physical data channel; SFd represents the spreading factor of the physical data channel; CEc represents the compensation factor modulus of the physical control channel; Bc represents the data amplitude factor of the physical control channel in the transmitted signals; Bd represents the data amplitude factor of the physical data channel in the transmitted signals; Gc represents the amplificatory multiple of the physical control channel amplitude due to truncation processing; Gd represents the amplificatory multiple of the physical data channel amplitude due to truncation processing; when there is no truncation processing, Gc=Gd=1.

Furthermore, the above method also has the following characteristic: said physical control channel and said physical data channel are dedicated physical control channel and dedicated physical data channel; or they are enhanced dedicated physical control channel and enhanced dedicated physical data channel; or they are high-speed dedicated physical control channel and high-speed dedicated physical data channel.

By using the technical solution of the present invention, it does not need to store large volume of data when computing the amplitude adjustment value, so it saves memory space and the steps for reading and writing data; it reduces the total computation load, thereby it saves the computation time and resources; it distributes the computation load of amplitude adjustment evenly so that no burst computation will be generated so as to contribute to the stability of the system.

**Brief Description of the Drawings**

Fig 1 is a schematic view for the current dedicated physical control channel de-spreading and the dedicated physical data channel de-spreading;
Fig 2 is a block diagram for realizing the traditional amplitude adjustment method;
Fig 3 is a block diagram for the amplitude adjustment system according to the embodiment of the present invention;
Fig 4 is a flow chart of the amplitude adjustment method according to the embodiment of the present invention;
Fig 5 is a schematic view for the CPU utilization condition in a traditional amplitude adjustment method;
Fig 6 is a schematic view for the CPU utilization condition in another traditional amplitude adjustment method; and
Fig 7 is a schematic view for the CPU utilization condition in the amplitude adjustment method according to the embodiment of the present invention.

**Preferred Embodiments of the Invention**

The following part combines the drawings and the embodiment to further describe the present invention.

In this embodiment, the dedicated physical control channel (DPCCH) and dedicated physical data channel (DPDCH) in WCDMA system are used as examples, but the present invention is not limited to the WCDMA system or the DPCCH and the DPDCH (it is also applicable to the enhanced dedicated physical control channel E-DPCCH, enhanced dedicated physical data channel E-DPDCH, and high-speed dedicated physical control channel HS-DPCCH etc.). Based on the appended drawings, the person with ordinary skill in the art can easily realize the present invention.

Fig 1 is the schematic view for the current dedicated physical control channel de-spreading and the dedicated physical data channel de-spreading. It shows the flow of obtaining the DPCCH de-spreading data and the DPDCH de-spreading data from the data received by antenna. In the WCDMA system, the spreading factor SFc of the dedicated physical control channel (DPCCH) is fixed, which is 256; the spreading factor SFd for the dedicated physical data channel (DPDCH) de-spreading needs to be indicated by the TFCI (Transmit Format Combined Indicator) information of the corresponding DPCCH frame; therefore, before de-spreading the DPDCH, it needs to perform DPCCH de-spreading and TFCI demodulation more than one frame time in advance (In reality, the time will be more than 1 frame-time but less than 1.5 frame-time). As it is shown in the figure, the received antenna data is divided into two streams: one is used in immediately performing DPCCH de-spreading and generating DPCCH de-spreading data for sequent processing, meanwhile, it is to perform DPCCH channel compensation and multi-path merge, and immediately perform TFCI decoding to obtain the spreading factor SFd of the current frame after one entire frame of DPCCH data has been received; the other needs to be buffered more than one frame's time, and it is to perform DPDCH de-spreading until the spreading factor of the current frame has been received, the generated DPDCH de-spreading data is used for the sequent processing. Such scheme for obtaining DPCCH de-spreading data and DPDCH de-spreading data provides the condition for computing the DPDCH amplitude adjustment value in advance.

The present invention fully utilizes the above scheme. The system for adjusting channel decoding data amplitude provided by this invention, as shown in fig 3, includes DPCCH channel compensation and merge module 301, DPDCH channel estimation module 302, DPDCH amplitude adjustment factor computation module 304, DPDCH channel compensation and merge as well as amplitude adjustment module 303 and decoding module(channel decoding) 305, wherein:

The DPCCH channel compensation and merge module 301 is used to perform channel compensation and multi-path merge for the received DPCCH de-spreading data and output the merged DPCCH data amplitude to the DPDCH amplitude adjustment factor computation module 304;

The DPDCH channel estimation module 302 is used to perform DPDCH channel estimation by using the received DPCCH de-spreading data and output the DPDCH channel estimation value to the DPDCH channel compensation and merge as well as amplitude adjustment module 303;

The DPDCH amplitude adjustment factor computation module 304 is used to perform statistics averaging for the data amplitude input from DPCCH channel compensation and merge module 301 in the first frame of each TTI; and after finishing the receiving of data of this frame, it is to estimate the data amplitude after the DPDCH channel compensation merge by using the known parameters such as DPCCH amplitude factor Bc, spreading factor SFc, channel compensation factor modulus CEc, DPDCH amplitude factor Bd, spreading factor SFd, channel compensation factor modulus CEd and channel estimation compensation truncation etc., and further compute the amplitude adjustment factor by using the amplitude adjustment target, and output the amplitude adjustment factor to the DPDCH channel compensation and merge as well as amplitude adjustment module 303;

The DPDCH channel compensation and merge as well as amplitude adjustment module 303 is used to perform channel compensation and multi-path merge for the received DPDCH de-spreading data by using the channel estimation value output from the DPDCH channel estimation module 302, perform amplitude adjustment for the compensated and merged data according to the amplitude adjustment factor received from the DPDCH amplitude adjustment factor computation module 304, and output the data for which the amplitude adjustment has been performed to the decoding module 305;

The decoding module 305 is used for channel decoding.

The method for adjusting channel decoding data amplitude by employing the above system, as shown in fig 4, comprises the following steps:

Step 1, after receiving the DPCCH de-spreading data, computing in real time the multi-path merged DPCCH data amplitude in the first frame of each TTI, meanwhile, using the DPCCH de-spreading data to perform DPDCH channel estimation;

"real time" here means that in every time interval or even every symbol, it is to perform cumulative addition for the DPCCH value amplitude, which is then divided by the number of the cumulative data after this first frame is done, so as to obtain the DPCCH amplitude: AmpDPCCH.

In one example, the data sequence after DPCCH multi-path merge in the first frame of TTI is: SDPCCH(k), k=1,2,...150, then the computation method for DPCCH data amplitude AmpDPCCH is :

$$AmpDPCCH=mean(abs(SDPCCH)) \qquad (1)$$

Wherein, the function abs( ) means to take the absolute value of the data; function mean( ) means to estimate average value for the data sequence. The above equation is to take the absolute value for the data in one frame after DPCCH multi-path merge and then estimate its average value, and the value is precisely the average amplitude. The method for estimating average value is to take the addition for N data in the data sequence and then divide the result by N; the N here can take 150, namely to take the absolute value and then take the addition for all the DPCCH multi-path merged data in one frame, then divide the result by 150 to get the average value. In order to save computation load, N can also be integer that is less than 150.

In real system, the 150 data are reported at multiple times, at least once in each time slot. One frame is divided into 15 time slots and each time slot has 10 data, therefore the computation for taking absolute value and addition can be performed in each time slot.

If N=150, the computation load in this step is 150.

Step 2, obtaining the relationship between the DPDCH data amplitude and the DPCCH data amplitude based on the radio link parameters of DPDCH and DPCCH; estimating the DPDCH data amplitude based on the DPCCH data amplitude, then dividing the input data amplitude required by channel decoding by the estimated data amplitude to obtain the amplitude adjustment factor Alpha;

The related radio link parameters include: Bc, Bd, SFc, SFd, Cec, Ced and the truncation relationship during demodulation process, wherein, Bc and Bd are the parameters defined in the standards, which represent the DPCCH data amplitude factor and DPDCH data amplitude factor in the transmitted signals; in the transmitted signals, the ratio between DPCCH amplitude and DPDCH amplitude is Bc:Bd, which is bridge for estimating DPDCH amplitude according to the DPCCH amplitude; the two parameters of Bc and Bd are already configured when the radio link is set up; the spreading factor SFc defined in the standards is 256; making the DPDCH spreading factor to be SFd, then the data sequence after DPDCH multi-path merge in the first frame of TTI in the example is: SDPDCH(k), k=1,2,...,(150*256/SFd); CEc is the DPCCH channel compensation factor modulus; CEd is the DPDCH channel compensation factor modulus; the CEc and CEd can be computed in the channel estimation process, alternatively, the amplitude ratio between CEd and CEc can be determined while designing the algorithm.

If there is a truncation processing during the DPCCH and DPDCH de-spreading, and assuming that the DPCCH amplitude is amplified by Gc times because of the truncation processing (if there is no truncation, Gc=1; if Gc<1, then the DPCCH amplitude is narrowed in real; the following Gd has the similar situation), and the DPDCH amplitude is amplified by Gd times because of the truncation processing, then the computation method for DPDCH data amplitude AmpDPDCH is:

$$AmpDPDCH = AmpDPCCH*(Gd*Bd*CEd*SFd)/(Gc*Bc*CEc*SFc) \qquad (2)$$

In the above example, there is no truncation processing during the DPCCH and DPDCH de-spreading, then Gc and Gd are both 1; the computation method for DPDCH data amplitude AmpDPDCH is:

$$AmpDPDCH = AmpDPCCH*(Bd*CEd*SFd)/(Bc*CEc*256) \qquad (3)$$

We use equations (1) and (3) for computation, and the computation result is equal to that of the following equation which is used in the prior art when storing part of the data that need to be adjusted and using this part of data for amplitude estimation and adjustment value computation:

$$AmpDPDCH=sum(abs(SDPDCH(k)))/(150*SFc/SFd),$$

$$in\ which\ k=1, 2,..., (150*SFc/SFd) \qquad (4)$$

Wherein SFd ≤256, for example, in voice communication, SFd=64, therefore the computation load of the equations (1) and (3) is less than the computation load of the equation (4); in voice communication, the computation load of the equations (1) and (3) is nearly one fourth of that of the equation (4); the SFd in data service communication is usually less than 64, thus the saved computation load in the present invention is evident.

After computing the DPDCH multi-path merged amplitude AmpDPDCH, the amplitude adjustment factor Alpha can be computed based on the target value AmpTarget of the amplitude after DPDCH adjustment:

$$Alpha = AmpTarget/AmpDPDCH \qquad\qquad (5)$$

AmpTarget is determined by the number of bits and the amplitude of the input data required by the decoding module. For example, the input data of decoding module is of 8 bits, and the average amplitude of the input data required by the decoding module is 32, then AmpTarget=32.

The computation load of this step is less than 10 multiplications.

Step 3, performing channel compensation and multi-path merge for the DPDCH de-spreading data by using the above DPDCH channel estimation value, the merged data immediately multiplying the above amplitude adjustment factor Alpha to perform amplitude adjustment.

In the above example, during the DPDCH demodulation, the multi-path merged data immediately multiplies the amplitude adjustment factor Alpha and is transformed into the number of the bits of the input data required by channel decoding.

Since the TTI amplitude adjustment factor is already computed before the arrival of each DPDCH TTI data head, it only needs to get the latest amplitude adjustment factor on the TTI border during the DPDCH demodulation; in the demodulation process, the processing flows for all the frames are the same.

In the voice communication, the computation load is 600 multiplications for each frame as well, however, the multiplications here are evenly distributed in respect of time and do not need extra data reading time.

Fig 7 shows the CPU utilization condition in the amplitude adjustment method according to the embodiment of this invention. Fig. 7 shows the CPU utilization condition in two TTI periods by using the same example of fig. 5 and fig. 6 where each TTI has two-frame data and the DPDCH spreading factor is 64. In fig 7, the abscissa represents time with its unit being time slot, the ordinate represents the number of additions or multiplications or data-readings. During the 15 time slots in the first frame of TTI, the method of the present invention needs to perform real time DPDCH amplitude adjustment with 40 DPDCH data in each time slot, perform DPCCH addition with 10 DPCCH data in each time slot, and read and write the addition result, so there are 52 computations in total. When reaching the first time slot of the second frame, there needs to perform 40 DPDCH data amplitude adjustment computations and about 10 amplitude adjustment value computations, so there are 50 computations in total. The sequent time slots in TTI need to have 40 amplitude adjustment computations. From fig 7, it can be seen that the computation load during the whole TTI process is evenly distributed, which is favorable to the system stability.

Moreover, it can be seen from figs 5, 6 and 7 that the average computation loads of the two traditional amplitude adjustment methods are both 100 computations per time slot, while in the present invention, the computation load of the amplitude adjustment method is 46.3 computations per time slot. Under the condition of using all the data of one frame's time to compute amplitude adjustment factor, the computation load of the present invention is far less than that of the traditional methods, even less than 1/2 of that of the traditional methods.

In summary, the technical solution of the present invention can reduce the consumption of memory resources as well as the computation load while achieving the same effect of amplitude adjustment performance, and it avoids burst computation so as to contribute to the stability of system.

**Industrial Applicability**

The present invention can be used in CDMA wireless communication system, and can reduce the memory consumption during amplitude adjustment computation, distribute the computation load evenly so as to contribute to the stability of system.

**Claims**

1. A method for adjusting amplitude of the data for channel decoding in CDMA system, comprising the following steps of:

    (a) after receiving de-spreading data of a physical control channel, computing in real time data amplitude of said physical control channel after multi-path merge of a first frame in each transmission time interval, meanwhile, performing channel estimation for a physical data channel by using the de-spreading data of said physical control channel; wherein the data amplitude of said physical control channel is computed in real time by: performing cumulative addition for the data amplitude of said physical control channel in each time interval or each symbol until the first frame ends, then dividing cumulation result by a number of the cumulative data;

(b) obtaining a relationship between the data amplitude of said physical data channel and the data amplitude of said physical control channel according to radio link parameters of said physical control channel and said physical data channel; estimating the data amplitude of said physical data channel according to the data amplitude of said physical control channel; dividing the input data amplitude required by channel decoding by the estimated data amplitude to obtain an amplitude adjustment factor; and

(c) performing channel compensation and multi-path merge for the de-spreading data of the physical data channel by using the channel estimation value of said physical data channel, the merged data immediately multiplying said amplitude adjustment factor to perform amplitude adjustment.

2. The method of claim 1, wherein in said step (b), it uses a following formula to compute the data amplitude of said physical data channel:

$$AmpPDCH = AmpPCCH*(Gd*Bd*CEd*SFd)/(Gc*Bc*CEc*SFc)$$

in which, AmpPDCH represents the data amplitude of the physical data channel; AmpPCCH represents the data amplitude of the physical control channel; CEd represents a compensation factor modulus of the physical data channel; SFd represents a spreading factor of the physical data channel; CEc represents the compensation factor modulus of the physical control channel; Be represents a data amplitude factor of the physical control channel in transmitted signals; Bd represents the data amplitude factor of the physical data channel in the transmitted signals; Gc represents an amplificatory multiple of the physical control channel amplitude due to truncation processing; Gd represents the amplificatory multiple of the physical data channel amplitude due to the truncation processing; when there is no truncation processing, Gc and Gd are both equal to 1.

3. The method of claim 1, or 2, wherein said physical control channel and said physical data channel are dedicated physical control channel and dedicated physical data channel; or they are enhanced dedicated physical control channel and enhanced dedicated physical data channel; or they are high-speed dedicated physical control channel and high-speed dedicated physical data channel.

4. A system for adjusting amplitude of the data for channel decoding in CDMA system, including a physical control channel compensation and merge module and a physical data channel estimation module, **characterized in** further including an amplitude adjustment factor computation module of the physical data channel, and a compensation and merge as well as amplitude adjustment module of the physical data channel, in which,

the amplitude adjustment factor computation module of the physical data channel, is used for receiving data amplitude of the physical control channel calculated by the physical control channel compensation and merge module; is used for obtaining a relationship between the data amplitude of the physical data channel and the data amplitude of the physical control channel, according to radio link parameters of the physical control channel and physical data channel; and is used for estimating the data amplitude of the physical data channel according to the data amplitude of the physical control channel, then dividing the input data amplitude required by channel decoding by the estimated data amplitude, and obtaining an amplitude adjustment factor which is then sent to the compensation and merge as well as amplitude adjustment module of the physical data channel;

the compensation and merge as well as amplitude adjustment module of the physical data channel is used for performing channel compensation and multi-path merge for the de-spreading data of the physical data channel by using the channel estimation value output from the physical data channel estimation module; the merged data immediately multiplies the amplitude adjustment factor to perform amplitude adjustment;

the physical control channel compensation and merge module, is used for computing data amplitude of the physical control channel after multi-path merge of a first frame in each transmission time interval by: performing cumulative addition for the data amplitude of the physical control channel in each time interval or each symbol until the first frame ends, then dividing cumulation result by a number of the cumulative data.

5. The system of claim 4, wherein the amplitude adjustment factor computation module of the physical data channel uses a following formula to compute the data amplitude of the physical data channel:

$$AmpPDCH = AmpPCCH*(Gd*Bd*CEd*SFd)/(Gc*Bc*CEc*SFc)$$

in which, AmpPDCH represents the data amplitude of the physical data channel; AmpPCCH represents the data amplitude of the physical control channel; CEd represents a compensation factor modulus of the physical data channel; SFd represents a spreading factor of the physical data channel; CEc represents the compensation factor modulus of the physical control channel; Bc represents a data amplitude factor of the physical control channel in transmitted signals; Bd represents the data amplitude factor of the physical data channel in the transmitted signals; Gc represents an amplificatory multiple of the physical control channel amplitude due to a truncation processing; Gd represents the amplificatory multiple of the physical data channel amplitude due to the truncation processing; when there is no truncation processing, Gc and Gd are both equal to 1.

6. The system of claim 4 or 5, wherein said physical control channel and said physical data channel are dedicated physical control channel and dedicated physical data channel; or they are enhanced dedicated physical control channel and enhanced dedicated physical data channel; or they are high-speed dedicated physical control channel and high-speed dedicated physical data channel.

**Patentansprüche**

1. Verfahren zum Justieren einer Amplitude der Daten zur Kanaldecodierung in einem CDMA-System, das die folgenden Schritte umfasst:

(a) nach dem Empfangen von Entspreizungsdaten eines physischen Steuerkanals, Berechnen - in Echtzeit - einer Datenamplitude des physischen Steuerkanals nach einer Mehrpfadfusion eines ersten Frames in jedem Sendezeitintervall, inzwischen Ausführen einer Kanalschätzung für einen physischen Datenkanal unter Verwendung der Entspreizungsdaten des physischen Steuerkanals; wobei die Datenamplitude des physischen Steuerkanals in Echtzeit berechnet wird durch: Ausführen einer kumulativen Addition für die Datenamplitude des physischen Steuerkanals in jedem Zeitintervall oder jedem Symbol, bis der erste Frame endet, dann Teilen des Kumulationsergebnisses durch eine Anzahl der kumulativen Daten;
(b) Erhalten einer Beziehung zwischen der Datenamplitude des physischen Datenkanals und der Datenamplitude des physischen Steuerkanals gemäß Funkverbindungsparametern des physischen Steuerkanals und des physischen Datenkanals; Schätzen der Datenamplitude des physischen Datenkanals gemäß der Datenamplitude des physischen Steuerkanals; Teilen der durch die Kanaldecodierung verlangten Eingangsdatenamplitude durch die geschätzte Datenamplitude, um einen Amplitudenjustierungsfaktor zu erhalten; und
(c) Ausführen einer Kanalkompensation und Mehrpfadfusion für die Entspreizungsdaten des physischen Datenkanals unter Verwendung des Kanalschätzungswertes des physischen Datenkanals, wobei die fusionierten Daten sofort den Amplitudenjustierungsfaktor multiplizieren, um eine Amplitudenjustierung auszuführen.

2. Verfahren nach Anspruch 1, wobei in dem Schritt (b) die folgende Formel zum Berechnen der Datenamplitude des physischen Datenkanals verwendet wird:

$$AmpPDCH = AmpPCCH \times (Gd \times Bd \times CEd \times SFd)/(Gc \times Bc \times CEc \times SFc)$$

wobei: AmpPDCH die Datenamplitude des physischen Datenkanals darstellt; AmpPCCH die Datenamplitude des physischen Steuerkanals darstellt; CEd einen Kompensationsfaktormodul des physischen Datenkanals darstellt; SFd einen Spreizungsfaktor des physischen Datenkanals darstellt; CEc den Kompensationsfaktormodul des physischen Steuerkanals darstellt; Be einen Datenamplitudenfaktor des physischen Steuerkanals in gesendeten Signalen darstellt; Bd den Datenamplitudenfaktor des physischen Datenkanals in der gesendeten Signalen darstellt; Gc ein verstärkendes Vielfaches der Amplitude des physischen Steuerkanals aufgrund einer Trunkationsverarbeitung darstellt; Gd das verstärkende Vielfache der Amplitude des physischen Datenkanals aufgrund der Trunkationsverarbeitung darstellt; und wenn keine Trunkationsverarbeitung stattfindet, so sind Gc und Gd beide gleich 1.

3. Verfahren nach Anspruch 1 oder 2, wobei der physische Steuerkanal und der physische Datenkanal ein dedizierter physischer Steuerkanal und ein dedizierter physischer Datenkanal sind; oder sie sind ein erweiterter dedizierter physischer Steuerkanal und ein erweiterter dedizierter physischer Datenkanal; oder sie sind ein dedizierter physischer Hochgeschwindigkeitssteuerkanal und ein dedizierter physischer Hochgeschwindigkeitsdatenkanal.

4. System zum Justieren einer Amplitude der Daten zur Kanaldecodierung in einem CDMA-System, das ein Physischer-Steuerkanal-Kompensations- und Fusionsmodul und ein Physischer-Datenkanal-Schätzungsmodul enthält, **dadurch gekennzeichnet, dass** es des Weiteren ein Amplitudenjustierungsfaktor-Berechnungsmodul des physischen Datenkanals und ein Kompensations- und Fusionssowie Amplitudenjustierungsmodul des physischen Datenkanals enthält, wobei

das Amplitudenjustierungsfaktor-Berechnungsmodul des physischen Datenkanals für Folgendes verwendet wird: Empfangen der durch das Physischer-Steuerkanal-Kompensations- und Fusionsmodul berechneten Datenamplitude des physischen Steuerkanals; Erhalten einer Beziehung zwischen der Datenamplitude des physischen Datenkanals und der Datenamplitude des physischen Steuerkanals gemäß Funkverbindungsparametern des physischen Steuerkanals und des physischen Datenkanals; und Schätzen der Datenamplitude des physischen Datenkanals gemäß der Datenamplitude des physischen Steuerkanals, dann Teilen der durch die Kanaldecodierung verlangten Eingangsdatenamplitude durch die geschätzte Datenamplitude, und Erhalten eines Amplitudenjustierungsfaktors, der dann an das Kompensations- und Fusions- sowie Amplitudenjustierungsmodul des physischen Datenkanals gesendet;

das Kompensations- und Fusions- sowie Amplitudenjustierungsmodul des physischen Datenkanals für Folgendes verwendet wird: Ausführen einer Kanalkompensation und Mehrpfadfusion für die Entspreizungsdaten des physischen Datenkanals unter Verwendung des von dem Physischer-Datenkanal-Schätzungsmodul ausgegebenen Kanalschätzungswertes, wobei die fusionierten Daten sofort den Amplitudenjustierungsfaktor multiplizieren, um eine Amplitudenjustierung auszuführen;

das Physischer-Steuerkanal-Kompensations- und Fusionsmodul für Folgendes verwendet wird: Berechnen der Datenamplitude des physischen Steuerkanals nach der Mehrpfadfusion eines ersten Frames in jedem Sendezeitintervall durch: Ausführen einer kumulativen Addition für die Datenamplitude des physischen Steuerkanals in jedem Zeitintervall oder jedem Symbol, bis der erste Frame endet, dann Teilen des Kumulationsergebnisses durch eine Anzahl der kumulativen Daten.

5. System nach Anspruch 4, wobei der Amplitudenjustierungsfaktor-Berechnungsmodul des physischen Datenkanals die folgende Formel verwendet, um die Datenamplitude des physischen Datenkanals zu berechnen:

$$AmpPDCH = AmpPCCH \times (Gd \times Bd \times CEd \times SFd)/(Gc \times Bc \times CEc \times SFc)$$

wobei: AmpPDCH die Datenamplitude des physischen Datenkanals darstellt; AmpPCCH die Datenamplitude des physischen Steuerkanals darstellt; CEd einen Kompensationsfaktormodul des physischen Datenkanals darstellt; SFd einen Spreizungsfaktor des physischen Datenkanals darstellt; CEc den Kompensationsfaktormodul des physischen Steuerkanals darstellt; Be einen Datenamplitudenfaktor des physischen Steuerkanals in gesendeten Signalen darstellt; Bd den Datenamplitudenfaktor des physischen Datenkanals in der gesendeten Signalen darstellt; Gc ein verstärkendes Vielfaches der Amplitude des physischen Steuerkanals aufgrund einer Trunkationsverarbeitung darstellt; Gd das verstärkende Vielfache der Amplitude des physischen Datenkanals aufgrund der Trunkationsverarbeitung darstellt; und wenn keine Trunkationsverarbeitung stattfindet, so sind Gc und Gd beide gleich 1.

6. System nach Anspruch 4 oder 5, wobei der physische Steuerkanal und der physische Datenkanal ein dedizierter physischer Steuerkanal und ein dedizierter physischer Datenkanal sind; oder sie sind ein erweiterter dedizierter physischer Steuerkanal und ein erweiterter dedizierter physischer Datenkanal; oder sie sind ein dedizierter physischer Hochgeschwindigkeitssteuerkanal und ein dedizierter physischer Hochgeschwindigkeitsdatenkanal.

## Revendications

1. Procédé d'ajustement d'amplitude des données pour un décodage de canal dans un système CDMA, comprenant les étapes suivantes :

(a) après la réception de données de désétalement d'un canal de commande physique, le calcul en temps réel d'une amplitude de données dudit canal de commande physique après une fusion multivoies d'une première trame dans chaque intervalle de temps de transmission, simultanément l'exécution d'une estimation de canal pour un canal de données physique par l'utilisation des données de désétalement dudit canal de commande physique ; dans lequel l'amplitude de données dudit canal de commande physique est calculée en temps réel par : l'exécution d'une addition cumulée pour l'amplitude de données dudit canal de commande physique dans chaque intervalle de temps ou chaque symbole jusqu'à la fin de la première trame, puis la division du résultat de cumul par un nombre des données cumulées ;

(b) l'obtention d'une relation entre l'amplitude de données dudit canal de données physique et l'amplitude de données dudit canal de commande physique en fonction de paramètres de liaison radio dudit canal de commande physique et dudit canal de données physique ; l'estimation de l'amplitude de données dudit canal de données physique en fonction de l'amplitude de données dudit canal de commande physique ; la division de l'amplitude de données entrée requise par un décodage de canal par l'amplitude de données estimée pour obtenir un facteur d'ajustement d'amplitude ; et

(c) l'exécution d'une compensation de canal et d'une fusion multivoies pour les données de désétalement du canal de données physique par l'utilisation de la valeur d'estimation de canal dudit canal de données physique, et la multiplication immédiate des données fusionnées par ledit facteur d'ajustement d'amplitude pour effectuer un ajustement d'amplitude.

2. Procédé selon la revendication 1, dans lequel, à ladite étape (b), la formule suivante est utilisée pour calculer l'amplitude de données dudit canal de données physique :

$$AmpPDCH = AmpPCCH*(Gd*Bd*CEd*SFd)/(Gc*Bc*GEc*SFc)$$

où AmpPDCH représente l'amplitude de données du canal de données physique ; AmpPCCH représente l'amplitude de données du canal de commande physique ; CEd représente un module de facteur de compensation du canal de données physique ; SFd représente un facteur d'étalement du canal de données physique ; CEc représente le module de facteur de compensation du canal de commande physique ; Bc représente un facteur d'amplitude de données du canal de commande physique dans des signaux transmis ; Bd représente le facteur d'amplitude de données du canal de données physique dans les signaux transmis ; Gc représente un multiple d'amplification de l'amplitude de canal de commande physique en raison d'un traitement de troncation ; Gd représente le multiple d'amplification de l'amplitude de canal de données physique en raison du traitement de troncation ; lorsqu'il n'y a pas de traitement de troncation, Gc et Gd sont tous les deux égaux à 1.

3. Procédé selon la revendication 1 ou 2, dans lequel ledit canal de commande physique et ledit canal de données physique sont un canal de commande physique dédié et un canal de données physique dédié ; ou ce sont un canal de commande physique dédié amélioré et un canal de données physique dédié amélioré ; ou ce sont un canal de commande physique dédié à grande vitesse et un canal de données physique dédié à grande vitesse.

4. Système d'ajustement d'amplitude des données pour un décodage de canal dans un système CDMA, comprenant un module de compensation et de fusion de canal de commande physique et un module d'estimation de canal de données physique, **caractérisé en ce qu'**il comprend en outre un module de calcul de facteur d'ajustement d'amplitude du canal de données physique et un module de compensation, de fusion et d'ajustement d'amplitude du canal de données physique, dans lequel :

le module de calcul de facteur d'ajustement d'amplitude du canal de données physique est utilisé pour la réception de l'amplitude de données du canal de commande physique calculée par le module de compensation et de fusion de canal de commande physique ; est utilisé pour l'obtention d'une relation entre l'amplitude de données du canal de données physique et l'amplitude de données du canal de commande physique en fonction de paramètres de liaison radio du canal de commande physique et du canal de données physique ; et est utilisé pour l'estimation de l'amplitude de données du canal de données physique en fonction de l'amplitude de données du canal de commande physique, puis la division de l'amplitude de données entrée requise par un décodage de canal par l'amplitude de données estimée, et l'obtention d'un facteur d'ajustement d'amplitude qui est ensuite envoyé au module de compensation, fusion et ajustement d'amplitude du canal de données physique ;

le module de compensation, fusion et ajustement d'amplitude du canal de données physique est utilisé pour l'exécution d'une compensation de canal et d'une fusion multivoies pour les données de désétalement du canal de données physique par l'utilisation de la valeur d'estimation de canal délivrée par le module d'estimation de canal de données physique ; et la multiplication immédiate des données fusionnées par le facteur d'ajustement d'amplitude pour effectuer l'ajustement d'amplitude ;

le module de compensation et de fusion de canal de commande physique est utilisé pour le calcul de l'amplitude de données du canal de commande physique après la fusion multivoies d'une première trame dans chaque intervalle de temps de transmission par : l'addition cumulée de l'amplitude de données du canal de commande physique dans chaque intervalle de temps ou chaque symbole jusqu'à la fin de la première trame, puis la division du résultat de cumul par un nombre des données cumulées.

5. Système selon la revendication 4, dans lequel le module de calcul de facteur d'ajustement d'amplitude du canal de données physique utilise la formule suivante pour calculer l'amplitude de données du canal de données physique :

$$AmpPDCH = AmpPCCH*(Gd*Bd*CEd*SFd)/(Gc*Bc*GEc*SFc)$$

où AmpPDCH représente l'amplitude de données du canal de données physique ; AmpPCCH représente l'amplitude de données du canal de commande physique ; CEd représente un module de facteur de compensation du canal de données physique ; SFd représente un facteur d'étalement du canal de données physique ; CEc représente le module de facteur de compensation du canal de commande physique ; Bc représente un facteur d'amplitude de données du canal de commande physique dans des signaux transmis ; Bd représente le facteur d'amplitude de données du canal de données physique dans les signaux transmis ; Gc représente un multiple d'amplification de l'amplitude de canal de commande physique en raison d'un traitement de troncation ; Gd représente le multiple d'amplification de l'amplitude de canal de données physique en raison du traitement de troncation ; lorsqu'il n'y a pas de traitement de troncation, Gc et Gd sont tous les deux égaux à 1.

6. Système selon la revendication 4 ou 5, dans lequel ledit canal de commande physique et ledit canal de données physique sont un canal de commande physique dédié et un canal de données physique dédié ; ou ce sont un canal de commande physique dédié amélioré et un canal de données physique dédié amélioré ; ou ce sont un canal de commande physique dédié à grande vitesse et un canal de données physique dédié à grande vitesse.

fig. 1

fig. 2

fig. 3

Start

After receiving the DPCCH de-spreading data, calculate in real time the DPCCH data amplitude after the multi-path merge of the first frame in each TTL, meanwhile, use DPCCH de-spreading data to perform DPDCH channel estimation

Obtain the relationship between the DPDCH data amplitude and the DPCCH data amplitude based on the wireless link parameters of DPDCH and DPCCH; estimate the DPDCH data amplitude based on the DPCCH data amplitude; divide the input data amplitude required by decoding by the estimated data amplitude and obtain the amplitude adjustment factor Alpha

Use the DPDCH channel estimation value to perform channel compensation and multi-path merge for DPDCH de-spreading data, the merged data immediately multiplies the amplitude adjustment factor Alpha to perform amplitude adjustment

End

fig. 4

CPU usage in traditional algorithm (1)

600 additions for calculating Dpdch amplitude average value + 600 readings for storage data + 600 amplitude adjustments of the previous frame + 40 amplitude adjustments of current time slot = 1840 computations

40 storages for the data per time slot

40 amplitude adjustments per time slot

time(unit:slot)

fig. 5

CPU usage in traditional algorithm(2)

600 readings for storage
data – 600 amplitude adjustments
for the data of the previous
frame + 40 amplitude adjustments
of current time slot = 1240
computations

40 storages for the
data + 40 additions
for the data per
time slot

40 amplitude adjustments
for the data per time slot

CPU Load

time(unit:slot)

fig. 6

CPU usage in the present invention

40 amplitude adjustments
per time slot + 10 average
value computations + one
reading for average
value + one storage for
average value

40 amplitude adjustments – 10
amplitude adjustment value
computations

40 amplitude
adjustments
per time slot

CPU Load

time(unit:slot)

fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1263179 A1